(19) **Europäisches Patentamt**
**European Patent Office**
**Office européen des brevets**

(11) **EP 3 307 792 B1**

(12) **EUROPÄISCHE PATENTSCHRIFT**

(45) Veröffentlichungstag und Bekanntmachung des Hinweises auf die Patenterteilung:
**24.10.2018 Patentblatt 2018/43**

(51) Int Cl.:
*C08F 2/01* (2006.01)        *C08F 2/22* (2006.01)
*C08L 31/04* (2006.01)

(21) Anmeldenummer: **16733083.6**

(86) Internationale Anmeldenummer:
**PCT/EP2016/065171**

(22) Anmeldetag: **29.06.2016**

(87) Internationale Veröffentlichungsnummer:
**WO 2018/001474 (04.01.2018 Gazette 2018/01)**

(54) **VERFAHREN ZUR HERSTELLUNG VON VINYLACETAT-ETHYLEN-COPOLYMERISATEN MITTELS EMULSIONSPOLYMERISATION**

METHOD FOR PRODUCING VINYL ACETATE-ETHYLENE COPOLYMERS BY MEANS OF EMULSION POLYMERIZATION

PROCÉDÉS DE FABRICATION DE COPOLYMÈRES D'ACÉTATE DE VINYLE ET D'ÉTHYLÈNE PAR POLYMÉRISATION EN ÉMULSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.04.2018 Patentblatt 2018/16**

(73) Patentinhaber: **Wacker Chemie AG**
**81737 München (DE)**

(72) Erfinder:
• **BABAR, Muhammad**
  **84489 Burghausen (DE)**

• **ECKL, Bernhard**
  **84489 Burghausen (DE)**
• **HERGETH, Wolf-Dieter**
  **84387 Julbach (DE)**
• **WEITZEL, Hans-Peter**
  **84571 Reischach (DE)**

(74) Vertreter: **Ege, Markus et al**
**Wacker Chemie AG**
**Hanns-Seidel-Platz 4**
**81737 München (DE)**

(56) Entgegenhaltungen:
**WO-A1-2013/113893    DE-A1- 19 828 742**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 307 792 B1

**Beschreibung**

Die vorliegende Erfindung betrifft Verfahren zur Herstellung von Vinylacetat-Ethylen-Copolymerisaten in Form deren wässrigen Dispersionen oder in Wasser redispergierbaren Pulvern mittels radikalisch initiierter Emulsionspolymerisation von Vinylacetat, Ethylen und gegebenenfalls weiterer ethylenisch ungesättigten Monomeren in Gegenwart von Schutzkolloiden und gegebenenfalls anschließender Trocknung.

Für die Emulsionspolymerisation von ethylenisch ungesättigten Monomeren sind Batch-, Semibatch- oder kontinuierlichen Verfahren etabliert. Batch- oder Semibatch-Verfahren werden für gewöhnlich in Rührreaktoren und kontinuierliche Verfahren in Rührkesselkaskaden, Rohrreaktoren bzw. Loop-Reaktoren durchgeführt. So beschreibt beispielsweise die DE 2555142 kontinuierliche Verfahren für die Emulsionspolymerisation von ethylenisch ungesättigten Monomeren in mehreren hintereinandergeschalteten Polymerisationsreaktoren. Die WO 02/59158 lehrt eine Polymerisation in Reaktoren mit externem Kühlkreislauf, in denen der Polymerisationsansatz im Kreis gepumpt wird, und zumindest eine Teilmenge der Monomere in den externen Kreislauf eindosiert wird. Dispergierte Polymerteilchen neigen beim Umpumpen zur Koagulation aufgrund der dabei eingebrachten Scherkräfte, was insbesondere bei großvolumigen Ansätzen zum Tragen kommt.

Für die kontinuierliche Massepolymerisation von ethylenisch ungesättigten Monomeren empfehlen die US 2005/0159565 und die US 2006/0062702 Taylorreaktoren, deren Reaktorraum sich vom Reaktoreingang hin zum Reaktorausgang weitet. Die US 2006/0204406 schlägt analoge Taylorreaktoren zur Lösungspolymerisation von ethylenisch ungesättigten Monomeren vor. Aus der DE 10150483 ist der Einsatz von Taylorreaktoren für die Herstellung von Poly(meth)acrylaten mittels Emulsionspolymerisation in Gegenwart von Emulgatoren bekannt. Die EP 2471594 beschreibt mit Wischern oder Schabern ausgestattete Taylorreaktoren für die Herstellung synthetischer Kautschuke mittels Polymerisation in organischen Lösungsmitteln.

Die WO 00/00280 lehrt Taylorreaktoren mit spezieller Geometrie des Reaktorvolumens und empfiehlt solche Reaktoren für unterschiedlichste Anwendungszwecke, beispielsweise für polymeranaloge Umsetzungen, Herstellung von Polyurethanharzen oder Polyharnstoffen oder auch für die Polymerisation unterschiedlichster ethylenisch ungesättigter Monomere in Lösung. Auch die DE 19960389 empfiehlt analoge Taylorreaktoren für unterschiedlichste Polymertechnologien. Die EP 0498583 beschreibt Taylorreaktoren für die Emulsionspolymerisation unterschiedlichster ethylenisch ungesättigter Monomere.

Vor diesem Hintergrund bestand die Problemstellung, bei der Emulsionspolymerisation von Vinylacetat und Ethylen in Gegenwart von Schutzkolloiden die mittleren Partikelgrößen oder die Partikelgrößenverteilungen der Copolymerisate auf effiziente Weise gezielt variieren zu können, ohne die Rezepturen der Polymerisationsansätze zu variieren oder ohne wesentliche Änderungen an den Polymerisationsbedingungen oder Polymerisationsverfahren vorzunehmen.

Des Weiteren ist es insbesondere im Falle von kontinuierlichen Emulsionspolymerisationsverfahren ein Problem, über die gesamte Dauer der Polymerisation konstante Polymerisationsbedingungen einzustellen und ein Oszillieren der Verfahrensparameter einzuschränken, damit über die gesamte Polymerisationsdauer Polymere mit denselben Eigenschaften entstehen.

Somit bestand die Aufgabe, Verfahren zur Emulsionspolymerisation von Vinylacetat und Ethylen in Gegenwart von Schutzkolloiden bereitzustellen, bei denen die Produkteigenschaften der so erhältlichen Copolymerisate, wie die mittlere Partikelgrößen oder die Partikelgrößenverteilung, durch technisch einfache Maßnahmen gezielt variiert werden können. Des Weiteren sollte ein Oszillieren der Verfahrensparameter während der Emulsionspolymerisation möglichst eingeschränkt werden. Die Aufgabe wurde überraschenderweise gelöst, indem die Emulsionspolymerisation von Vinylacetat und Ethylen in Gegenwart von Schutzkolloiden in einem Taylorreaktor durchgeführt wurde. Die mittleren Partikelgrößen beziehungsweise die Partikelgrößenverteilungen der Vinylacetat-Ethylen-Copolymerisate können so auf technologisch einfache Weise variiert werden, ohne in die Polymerisationsrezepturen eingreifen zu müssen.

Überraschend war hierbei auch, dass diese Effekte bei der Copolymerisation des unter Normalbedingungen gasförmigen Monomers Ethylen in Taylorreaktoren erzielt werden können. Denn in Taylorreaktoren wird beispielsweise im Ringspalt zwischen zwei relativ zu einander rotierenden koaxialen, konzentrischen Zylindern eine sogenannte Taylor-Wirbelströmung erzeugt, wodurch die Komponenten innerhalb eines Taylor-Wirbelrings durch die Wirbelströmung homogen gemischt werden, unterschiedliche Taylor-Wirbelringe jedoch im Allgemeinen nicht oder nur geringfügig miteinander vermischt werden. Dementsprechend reagieren im Wesentlichen ausschließlich die Komponenten innerhalb eines Taylor-Wirbelrings miteinander. Bei der Emulsionspolymerisation von Ethylen und Vinylacetat, die unter Normalbedingungen gasförmig beziehungsweise flüssig sind, war zu erwarten, dass gasförmiges Ethylen unterschiedliche Taylor-Wirbelringe durchströmt und infolgedessen die erfindungsgemäße Aufgabe mit Ethylen nicht gelöst werden kann. Überraschenderweise wurde die erfindungsgemäße Aufgabe bei Einsatz der Komponenten Vinylacetat, Ethylen und Schutzkolloide gelöst.

Gegenstand der Erfindung sind Verfahren zur Herstellung von Vinylacetat-Ethylen-Copolymerisaten in Form von deren wässrigen Dispersionen oder in Wasser redispergierbaren Pulvern mittels radikalisch initiierter Emulsionspolymerisation und gegebenenfalls anschließender Trocknung der dabei erhaltenen Polymerdispersionen, dadurch gekennzeichnet, dass die Emulsionspolymerisation von Vinylacetat, Ethylen und gegebenenfalls einem oder mehreren weiteren ethylenisch ungesättigten Monomeren in Gegenwart von einem oder mehreren Schutzkolloiden in einem oder mehreren Taylorreaktoren durchgeführt wird.

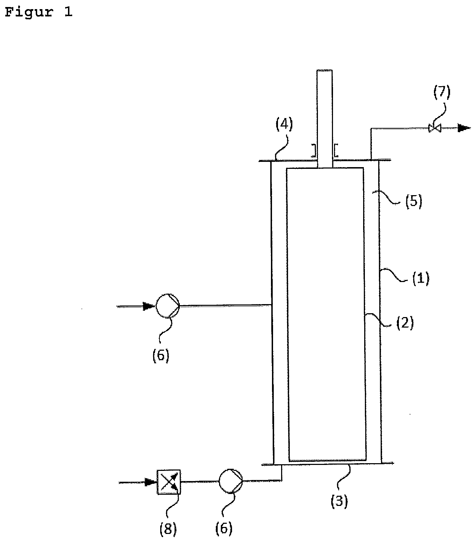

Eine bevorzugte Ausgestaltung eines erfindungsgemäßen Taylorreaktors ist in Figur 1 beispielhaft dargestellt. Die Ausführung des Taylorreaktors in Figur 1 ist rein illustrativ und in keiner Hinsicht einschränkend für die vorliegende Erfindung.

Taylorreaktoren (Figur 1) umfassen im Allgemeinen eine äußere Reaktorwand (1), einen darin befindlichen Rotor (2), einen Reaktorboden (3) und einen Reaktordeckel (4), welche zusammen das ringspaltförmige Reaktorvolumen (5) definieren.

Des Weiteren umfassen Taylorreaktoren im Allgemeinen mindestens eine Dosierungsvorrichtung (6) und mindestens eine Entnahmevorrichtung (7). Über Dosierungsvorrichtungen (6) können Edukte oder sonstige Ausgangsstoffe, vorzugsweise kontinuierlich, in das ringspaltförmige Reaktorvolumen (5) eingebracht werden. Durch die Entnahmevorrichtung (7) kann Polymerisationsgemisch aus dem Taylorreaktor, vorzugsweise kontinuierlich, abgeführt werden. Die Dosierungsvorrichtung (6) kann mit einem oder mehreren Mischaggregaten (8) verbunden sein.

Die Strecke von einer Dosierungsvorrichtung (6) zu einer Entnahmevorrichtung (7) definiert eine Durchflussrichtung des Polymerisationsgemischs durch den Taylorreaktor. Die Durchflussrichtung gibt an, in welche Richtung das Polymerisationsgemisch den Taylorreaktor durchströmt.

Die äußere Reaktorwand (1), die dem Reaktorvolumen (5) zugewandt ist, wird auch als Innenwand der äußeren Reaktorwand (1) bezeichnet. Die Wand des Rotors (2), die dem Reaktorvolumen (5) zugewandt ist, wird auch Außenwand des Rotors (2) genannt.

Die Form des ringspaltförmigen Reaktorvolumens (5) des Taylorreaktors wird durch die Geometrien des Rotors (2), der äußeren Reaktorwand (1), des Reaktorbodens (3) und des Reaktordeckels (4) definiert. Der Rotor (2) und die äußere Reaktorwand (1) können grundsätzlich beliebige Geometrien annehmen. So können die Innenwand der äußeren Reaktorwand (1) und die Außenwand des Rotors (2) unabhängig voneinander über die gesamte Reaktorlänge hinweg - im Querschnitt gesehen - einen beliebigen Umfang aufweisen, beispielsweise einen ovalen, elliptischen, dreieckigen, rechteckigen, quadratischen, fünfeckigen, sechseckigen oder mehreckigen, gegebenenfalls mit abgerundeten Ecken, oder vorzugsweise einen kreisförmigen Umfang.

Besonders bevorzugt haben die Innenwand der äußeren Reaktorwand (1) und die Außenwand des Rotors (2) eine zylinderförmige Geometrie. Dementsprechend wird der Rotor (2) auch als Innenzylinder und die äußere Reaktorwand (1) auch als Außenzylinder bezeichnet.

Die Geometrie des ringspaltförmigen Reaktorvolumens (5) ist in Durchflussrichtung vorzugsweise konstant. Der Umfang der äußeren Reaktorwand (1) und der Umfang des Rotors (2) sind in Durchflussrichtung vorzugsweise konstant; d.h. der Durchmesser der äußeren Reaktorwand (1) und der Durchmesser des Rotors (2) sind in Durchflussrichtung vorzugsweise konstant. Bevorzugte Taylorreaktoren haben also keine konische äußere Reaktorwand (1) und/oder keinen konischen Rotor (2).

Der Reaktorboden (3) und der Reaktordeckel (4) können auf gängige Weise ausgestaltet sein. Der Reaktorboden (3) und/ oder der Reaktordeckel (4) schließen das Reaktorvolumen (5) beispielsweise kreisrund, oval, elliptisch oder mehreckig oder vorzugsweise planar oder annähernd planar ab.

Der Rotor (2) reicht vorzugsweise vom Reaktorboden (3) bis zum Reaktordeckel (4).

Die Oberfläche der Innenwand der äußeren Reaktorwand (1) und/oder die Oberfläche der Außenwand des Rotors (2) können rau oder vorzugsweise glatt sein. Alternativ können die genannten Oberflächen auch ein reliefartiges radiales und/oder axiales, vorzugsweise radiales, Oberflächenprofil aufweisen.

Die äußere Reaktorwand (1) ist bevorzugt stationär, wogegen sich der Rotor (2) vorzugsweise dreht. In einer Variante rotieren die äußere Reaktorwand (1) und der Rotor (2) in die gleiche Richtung, wobei sich die Winkelgeschwindigkeiten des Rotors (2) und der äußeren Reaktorwand (1) unterscheiden. In einer weiteren Variante rotieren die äußere Reaktorwand (1) und der Rotor (2) in entgegengesetzter Richtung. Die äußere Reaktorwand (1) beziehungsweise der Rotor (2) drehen sich vorzugsweise um eine Achse, die durch den Reaktorboden (3) und den Reaktordeckel (4) geht.

Der Taylorreaktor kann - in Längsrichtung beziehungsweise in Durchflussrichtung gesehen - vertikal, horizontal oder in einer Lage zwischen diesen beiden Richtungen gelagert werden. Die Längsrichtung des Taylorreaktors ist allgemein die Strecke vom Reaktorboden (3) bis zum Reaktordeckel (4). Die vertikale Lagerung ist bevorzugt. Wenn der Taylorreaktor nicht horizontal gelagert ist, kann ihn das Reaktionsmedium mit der Schwerkraft von oben nach unten durchströmen oder vorzugsweise entgegen der Schwerkraft von unten nach oben.

Der Rotor (2) des Taylorreaktors kann exzentrisch oder vorzugsweise konzentrisch gelagert sein; d.h. seine Längsachse kann mit der Längsachse der äußeren Reaktorwand (1) übereinstimmen (konzentrisch) oder nicht (exzentrisch).

Bevorzugt ist der Taylorreaktor mit mindestens zwei, besonders bevorzugt mindestens drei und am meisten bevorzugt mindestens fünf Dosierungsvorrichtungen (6) ausgestattet. Über unterschiedliche Dosierungsvorrichtungen (6) können unterschiedliche Ausgangsstoffe zudosiert werden. Es können auch Stoffe im Maße ihres Verbrauchs zugeführt werden.

Beispiele für geeignete Dosierungsvorrichtungen (6) sind Rohre oder Düsen. Dosierungsvorrichtungen (6) können beispielsweise in das ringspaltförmige Reaktorvolumen (5) hineinragen oder vorzugsweise mit der Reaktorwand bündig abschließen. Die Dosierungsvorrichtungen (6) sind vorzugsweise in die äußere Reaktorwand (1), in den Reaktorboden (3), in den Rotor (2) und/oder in das Lager des Rotors (2) eingelassen.

Besonders bevorzugt ist der Reaktorboden (3) mit mindestens einer Dosierungsvorrichtung (6) versehen. Mindestens eine Dosierungsvorrichtung (6) ist besonders bevorzugt auch am Rotor (2) angebracht, insbesondere in das Lager des Rotors (2) eingelassen. Besonders bevorzugt sind auch eine oder mehrere Dosierungsvorrichtungen (6) in die äußere Reaktorwand (1) eingelassen.

In die äußere Reaktorwand (1) können mehrere Dosierungsvorrichtungen (6) in gleicher Höhe oder vorzugsweise in Durchflussrichtung örtlich nacheinander, insbesondere vertikal nacheinander angebracht sein. Vorzugsweise sind mindestens zwei, besonders bevorzugt mindestens drei und am meisten bevorzugt mindestens vier Dosierungsvorrichtungen (6) in Durchflussrichtung örtlich nacheinander in die äußere Reaktorwand (1) eingelassen.

Am meisten bevorzugt sind ein oder mehrere Dosierungsvorrichtungen (6) in den Reaktorboden (3), ein oder mehrere Dosierungsvorrichtungen (6) in den Rotor (2) oder in das Lager des Rotors (2) und mindestens eine, insbesondere mindestens zwei Dosierungsvorrichtungen (6) in Durchflussrichtung örtlich nacheinander in die äußere Reaktorwand (1) angebracht. Besonders bevorzugt sind 1 bis 6, insbesondere 2 bis 4 Dosierungsvorrichtungen (6) in Durchflussrichtung örtlich nacheinander in die äußere Reaktorwand (1) angebracht.

Einer oder mehreren Dosierungsvorrichtungen (6) können ein oder mehrere Mischaggregate (8) vorgeschaltet sein. In einem Mischaggregat (8) können Edukte oder sonstige Ausgangsmaterialien gemischt und erforderlichenfalls temperiert werden. Beispiele für geeignete Mischaggregate (8) sind Rotor/Stator-Mischer, Hochdruckhomogenisierungsaggregate, Druckentspannungshomogenisierungsdüsen, Microfluidizer oder statische Mischer.

Über die Entnahmevorrichtung (7) kann Polymerisationsgemisch aus dem Taylorreaktor entnommen werden. Beispielsweise können die äußere Reaktorwand (1) oder vorzugsweise der Reaktordeckel (4) mit einer oder mehreren Entnahmevorrichtungen (7) ausgestattet sein. Besonders bevorzugt befindet sich eine Entnahmevorrichtung (7) an der höchsten Stelle des Reaktordeckels (4). Die höchste Stelle des Reaktordeckels (4) ist die Stelle, die vom Reaktorboden (3) am weitesten entfernt ist. Am meisten bevorzugt ist nur eine Entnahmevorrichtung (7) an den Taylorreaktor angebracht.

Des Weiteren kann der Taylorreaktor noch mit gängigem Zubehör ausgerüstet sein, beispielsweise zum Heizen und/oder Kühlen oder einer oder mehreren Messeinrichtungen, beispielsweise zum Messen des Drucks, der Temperatur, von Stoffkonzentrationen, des Feststoffgehalts oder der Viskosität.

Im ringspaltförmigen Reaktorvolumen (5) befinden sich vorzugsweise keine Schaber oder Wischer. Besonders bevorzugt sind keine Schaber oder Wischer vorhanden, die innerhalb des ringspaltförmigen Reaktorvolumens (5) drehbar mit dem Taylor-reaktor verbunden sind. Mit Schabern oder Wischern kann bei herkömmlichen Taylorreaktoren Belag von der Reaktorwand entfernt werden, indem die Schaber oder Wischer an der Innenseite des Reaktors entlanglaufen. Beim erfindungsgemäßen Verfahren sind solche Maßnahmen vorteilhafterweise nicht erforderlich.

Die einzelnen Bestandteile des Taylorreaktors können auf gängigen Materialien basieren, insbesondere Metallen, wie Edelstahl.

Der Taylorreaktor kann in gängiger Weise dimensioniert werden und auf herkömmliche Weise auf unterschiedliche Größen ausgelegt werden.

Die mittlere Verweilzeit der Polymerisationsmischung im Taylorreaktor liegt beispielsweise bei 0,5 Minuten bis 5 Stunden, vorzugsweise 2 Minuten bis 3 Stunden, besonders bevorzugt 10 Minuten bis 2 Stunden und am meisten bevorzugt 20 Minuten bis 45 Minuten. Die mittlere Verweilzeit kann beispielsweise über die Geschwindigkeit der Dosierungen oder die Dimensionierung des Taylorreaktors eingestellt werden.

Der Rotor (2) hat eine Drehzahl von beispielsweise 10 bis 1500 Umdrehungen pro Minute. Eine Umdrehung steht für eine Umdrehung des Rotors (2) um seine Längsachse beziehungsweise um die Achse, die parallel zur Durchflussrichtung ist. Der Rotor (2) kann in gängiger Weise beispielsweise über eine Magnetkupplung oder ein mechanisches Getriebe angetrieben werden.

Die Taylorzahl Ta des Polymerisationsgemischs im Taylorreaktor liegt bei vorzugsweise 1 bis 10000, besonders bevorzugt 50 bis 5000 und am meisten bevorzugt 100 bis 2500. Die Taylor-Zahl ist durch folgende Gleichung definiert:

$$Ta = \omega_i \ r_i \ d \ \nu_i^{-1} \ (d/r_i)^{1/2}$$

mit $\omega_i$ = Winkelgeschwindigkeit des Innenzylinders, $r_i$ = äußerer Radius des Innenzylinders, d = Spaltbreite = $r_a - r_i$, $r_a$ = innerer Radius des Außenzylinders und $\nu_i$ = kinematische Viskosität des Polymerisationsgemischs im Ringspalt. Die kinematische Viskosität $\nu_i$ ist bekanntermaßen der Quotient aus der Brookfield-Viskosität und der Dichte des Polymerisationsgemischs. Die Brookfield-Viskosität des Polymerisationsgemischs wird mit einem Brookfieldviskosimeter bestimmt, nach Temperierung auf 20°C, unter Verwendung von Spindel 1 bzw. 2 bei 20 Umdrehungen pro Minute.

Der Druck im ringspaltförmigen Reaktorvolumen (5) beträgt vorzugsweise 10 bis 90 bar$_{abs.}$ und besonders bevorzugt 30 bis 80 barabs..

Die Temperaturen des Polymerisationsgemischs im ringspaltförmigen Reaktorvolumen (5) liegen zwischen vorzugsweise 40°C und 120°C und besonders bevorzugt zwischen 50 und 110°C.

Edukte und Ausgangsstoffe können vor Einbringen in den Taylorreaktor temperiert werden. So können beispielsweise ein oder mehrere Edukte und/oder Ausgangsstoffe bei Einbringen in den Taylorreaktor auf eine Temperatur zwischen 10°C und der Polymerisationstemperatur temperiert sein. Vorzugsweise ist eine Mischung umfassend Vinylacetat, Ethylen, Schutzkolloide und gegebenenfalls Initiatoren, insbesondere Reduktionsinitiatoren, vor beziehungsweise bei Einbringen in den Taylorreaktor auf eine Temperatur knapp unterhalb der Polymerisationstemperatur oder auf Polymerisationstemperatur temperiert. Vorzugsweise werden die vorgenannten Mischungen auf eine Temperatur zwischen der Polymerisationstemperatur und 20°C, insbesondere 10°C unterhalb der Polymerisationstemperatur temperiert. Besonders bevorzugt werden Initiatoren, insbesondere Oxidationsinitiatoren, unmittelbar vor Eintritt in den Taylorreaktor zu einer so temperierten Mischung gegeben. Die Temperierung kann vor, während oder nach ihrer Durchmischung erfolgen. Hierzu können gängige Wärmeaustauscher Einsatz finden.

Der Taylorreaktor kann mit gängigen Kühl- und/oder Heizvorrichtungen temperiert werden, wie beispielsweise mit Mantelkühlern oder Mantelheizern. Kühl- und/oder Heizvorrichtungen können beispielsweise am Taylorreaktor, am Rotor (2), an Dosierungsvorrichtungen (6) oder an Mischaggregaten (8) angebracht sein. Beispielsweise kann die äußere Reaktorwand (1) mit einem Kühl- oder Heizmantel versehen sein. Es können auch unterschiedliche Zonen des Taylorreaktors auf unterschiedliche Temperaturen temperiert werden. Vorzugsweise wird der Taylorreaktor einheitlich auf eine Temperatur temperiert. Vor Beginn der Polymerisation wird der Taylorreaktor vorzugsweise mit einer Polymerdispersion befüllt, welche vorzugsweise dem Endprodukt der Polymerisation bezüglich Polymerzusammensetzung, Art und Menge des Schutzkolloids sowie Partikelgröße und Festgehalt entspricht. Alternativ kann der Taylor-reaktor vor Beginn des erfindungsgemäßen Verfahrens, das heißt vor Beginn der Polymerisation, mit einer Mischung befüllt werden, die Edukte und Ausgangsstoffe, aber keine Initiatoren, insbesondere keine Oxidationsinitiatoren umfasst. Schließlich kann der Taylorreaktor vor Beginn des erfindungsgemäßen Verfahrens mit Wasser, vorzugsweise ausschließlich mit Wasser befüllt sein.

Die Emulsionspolymerisation im Taylorreaktor wird im Allgemeinen in wässrigem Medium durchgeführt. Vorzugsweise werden keine organischen Lösungsmittel eingesetzt.

Der Taylorreaktor wird im Allgemeinen kontinuierlich betrieben. Im kontinuierlichen Betrieb werden während der Emulsionspolymerisation über ein oder mehrere Dosierungsvorrichtungen (6) Edukte, insbesondere Vinylacetat, Ethylen, gegebenenfalls weitere ethylenisch ungesättigte Monomere, Schutzkolloide und/oder Initiatoren, in den Taylorreaktor eingebracht und über die Entnahmevorrichtung (7) Polymerisationsgemisch aus dem Taylorreaktor entnommen. Bei kontinuierlichem Betrieb sollen die eintretenden Massenströme den austretenden Massenströmen entsprechen.

In einer bevorzugten Ausführungsform wird der Taylorreaktor in einer Reaktorkaskade betrieben. Eine Reaktorkaskade umfasst vorzugsweise einen oder mehrere Taylorreaktoren und einen oder mehrere weitere Reaktoren, insbesondere Rührkessel, wie Druckreaktoren oder Entspannungsreaktoren. Besonders bevorzugt umfasst eine Reaktorkaskade einen Taylorreaktor und einen oder mehrere Druckreaktoren und/oder einen oder mehrere Entspannungsreaktoren. In einer Reaktorkaskade sind vorzugsweise mindestens zwei oder mindestens drei Reaktoren in Reihe geschaltet. Beispielsweise kann in einer Reaktorkaskade in einem Taylorreaktor eine Saat hergestellt und in einem nachgelagerten Druckreaktor die weitere Polymerisation zur Herstellung der Polymerdispersion durchgeführt werden. In einer Reaktorkaskade wird beispielsweise einem Taylorreaktor Polymerisationsgemisch an Entnahmevorrichtung (7) entnommen und in einen zweiten Reaktor, insbesondere einen Rührkessel, beispielsweise einen Druckreaktor oder Entspannungsreaktor, eingebracht. Mit Reaktorkaskaden kann die Raumzeitausbeute gesteigert werden.

Die Polymerisation kann mit gängigen Initiatoren, insbesondere einem Redoxsystem (Redox-Initiator-Kombination) aus Oxidationskomponente (Oxidationsinitiator) und Reduktionskomponente (Reduktionsinitiator) initiiert werden. Der Monomerumsatz wird im Allgemeinen über die Initiatordosierung gesteuert.

Über eine oder mehrere Dosierungsvorrichtungen (6) werden üblicherweise die einzelnen Edukte für die Emulsionspolymerisation, wie Vinylacetat, Ethylen, gegebenenfalls weitere ethylenisch ungesättigte Monomere, Schutzkolloide und/oder Initiatoren, insbesondere Oxidationsinitiatoren oder Reduktionsinitiatoren, zugegeben. Die Edukte können einzeln oder in vorgemischter Form, in Reinsubstanz oder in Form einer Lösung, Suspension oder Emulsion zugegeben werden. Vorzugsweise werden Edukte in einer Mischeinheit (8), die einer Dosierungsvorrichtung (6) vorgeschaltet ist, vorgemischt.

Über eine oder mehrere Dosierungsvorrichtungen (6), die in den Reaktorboden (3) eingelassen sind, werden vorzugsweise Monomere, insbesondere Vinylacetat, Ethylen und gegebenenfalls weitere ethylenisch ungesättigte Monomere, Schutzkolloide sowie gegebenenfalls Initiatoren, insbesondere Reduktionsinitiatoren, zugegeben.

Über eine oder mehrere in den Rotor (2) oder in das Lager des Rotors (2) eingelassene Dosierungsvorrichtungen (6) werden vorzugsweise Initiatoren zugegeben, insbesondere Oxidationsinitiatoren.

Über ein oder mehrere Dosierungsvorrichtungen (6), die, vorzugsweise in Durchflussrichtung örtlich nacheinander, in die äußere Reaktorwand (1) eingelassen sind, werden vorzugsweise Monomere und besonders bevorzugt Initiatoren, insbesondere Oxidationsinitiatoren, zugegeben.

Pfropfcopolymerisate, Kern-Schale-Polymerisate oder Copolymerisate mit heterogener Morphologie sind beispielsweise erhältlich, indem über unterschiedliche Dosierungsvorrichtungen (6) unterschiedliche ethylenisch ungesättigte Monomere oder unterschiedliche Monomerzusammensetzungen zudosiert werden. So kann beispielsweise in einem ersten Teilstück des Taylorreaktors, das an eine erste Dosierungsvorrichtung (6) anschließt, eine erste Polymereinheit, beispielsweise ein Backbone-Polymerisat, der Kern von Kern-Schale-Polymerisaten oder eine erste Phase eines Heterophasen-Polymers, hergestellt werden und in einem oder mehreren weiteren, örtlich nachgelagerten Teilstücken des Taylorreaktors, die je an eine oder mehrere weitere Dosierungsvorrichtungen (6) anschließen, eine oder mehrere weitere Polymereinheiten, beispielsweise ein oder mehrere Seitenäste von Pfropfcopolymerisaten, die Schale von Kern-Schale-Polymerisaten oder ein oder mehrere weitere Phasen von Heterophasen-Polymeren, hergestellt werden.

Nach Abschluss der Polymerisation kann zur Restmonomerentfernung in Anwendung an sich bekannter Methoden nachpolymerisiert werden, im Allgemeinen durch mit Redoxkatalysator initiierter Nachpolymerisation. Die Nachpolymerisation kann beispielsweise in einem Rührkessel erfolgen. Hierzu kann dem Taylorreaktor an Entnahmevorrichtung (7) Polymerisationsgemisch entnommen und in einen Rührkessel überführt werden. Vorzugsweise wird die Nachpolymerisation im Taylorreaktor durchgeführt, insbesondere in dem Bereich des Taylorreaktors, der an den Reaktordeckel (4) angrenzt. Hierzu können beispielsweise über die Dosierungsvorrichtung (6), die in Durchflussrichtung dem Reaktordeckel (4) am nächsten ist, ein oder mehrere Initiatoren zugegeben werden.

Flüchtige Bestandteile, wie Restmonomere, können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die Entfernung flüchtiger Bestandteile erfolgt vorzugsweise in einem Rührkessel.

Die Herstellung der Vinylacetat-Ethylen-Copolymerisate erfolgt mittels radikalisch initiierter Emulsionspolymerisation von Vinylacetat, Ethylen und gegebenenfalls einem oder mehreren weiteren ethylenisch ungesättigten Monomeren in Gegenwart von einem oder mehreren Schutzkolloiden.

Der Anteil von Vinylacetat beträgt vorzugsweise mindestens 50 Gew.-%, besonders bevorzugt 60 bis 95 Gew.-% und am meisten bevorzugt 70 bis 90 Gew.-%. Der Anteil von Ethylen beträgt vorzugsweise 1 bis 50 Gew.-%, besonders bevorzugt 5 bis 40 Gew.-% und am meisten bevorzugt 10 bis 30 Gew.-%. Die Angaben in Gew.-% beziehen sich je auf das Gesamtgewicht der insgesamt für die Emulsionspolymerisation eingesetzten Monomere.

Die weiteren ethylenisch ungesättigten Monomere werden vorzugsweise ausgewählt aus der Gruppe umfassend Vinylester von Carbonsäuren mit 3 bis 18 C-Atomen, (Meth)acrylsäureester, Vinylaromaten, Olefine mit mindestens 3 C-Atomen, 1,3-Diene und Vinylhalogenide und gegebenenfalls weiteren damit copolymerisierbaren Monomeren. Die weiteren ethylenisch ungesättigten Monomere sind also von Vinylacetat und Ethylen verschieden.

Beispiele für Vinylester von Carbonsäuren mit 3 bis 18 C-Atomen sind Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9® oder VeoVa10® (Handelsnamen der Firma Resolution).

Geeignete Monomeren aus der Gruppe Acrylsäureester oder Methacrylsäureester sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Bevorzugtes Olefin mit mindestens 3 C-Atomen ist Propylen und die bevorzugten Diene sind 1,3-Butadien und Isopren.

Gegebenenfalls können noch 0 bis 10 Gew.-%, bezogen auf das Gesamtgewicht des Monomergemisches, Hilfsmonomere copolymerisiert werden. Bevorzugt werden 0,1 bis 5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyl-tri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beipielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugt werden Monomergemische von Vinylacetat mit 1 bis 50 Gew.-% Ethylen; Monomergemische von Vinylacetat mit 1 bis 50 Gew.-% Ethylen und 1 bis 50 Gew.-% von einem oder mehreren weiteren Comonomeren aus der Gruppe Vinylester mit 3 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11; Monomergemische von Vinylacetat, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesonders n-Butylacrylat oder 2-Ethylhexylacrylat; und Monomergemische mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Monomergemische mit Vinylacetat, 1 bis 50 Gew.-% Ethylen und 1 bis 60 Gew.-% Vinylchlorid; wobei die Monomergemische noch die genannten Hilfsmonomere in den genannten Mengen enthalten können, und sich die Angaben in Gew.-% auf jeweils 100 Gew.-% aufaddieren.

Am meisten bevorzugt werden Monomergemische mit Vinylacetat und 5 bis 50 Gew.-% Ethylen; oder Monomergemische mit Vinylacetat, 1 bis 50 Gew.-% Ethylen und 1 bis 50 Gew.-% von einem Vinylester von $\alpha$-verzweigten Monocarbonsäuren mit 9 bis 11 C-Atomen; oder Monomergemische mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; oder Monomergemische mit Vinylacetat, 5 bis 50 Gew.-% Ethylen und 1 bis 60 Gew.-% Vinylchlorid.

Die Monomerauswahl bzw. die Auswahl der Gewichtsanteile der Comonomere erfolgt dabei so, dass im allgemeinen eine Glasübergangstemperatur Tg von -50°C bis +50°C, bevorzugt von - 20°C bis +30°C, resultiert. Die Glasübergangstemperatur Tg der Polymerisate kann in bekannter Weise mittels DSC (Dynamische Differenz-Thermoanalyse, DIN EN ISO 11357-1/2), beispielsweise mit dem dynamischen Differenzkalorimeter DSC1 der Firma Mettler-Toledo im offenen Tiegel bei einer Heizrate von 10 K/min bestimmt werden. Als Glasübergangstemperatur wird im Wärmeflussdiagramm die Temperatur am Mittelpunkt der Stufe (Mittelpunkt = halbe Stufenhöhe der Stufe des Wärmeflusses) der zweiten Aufheizkurve ausgewertet. Die Tg kann auch mittels der Fox-Gleichung näherungsweise vorausberechnet werden. Nach Fox T. G., Bull. Am. Physics Soc. 1, 3, page 123 (1956) gilt: $1/Tg = x_1/Tg_1 + x_2/Tg_2 + ... + x_n/Tg_n$, wobei $x_n$ für den Massebruch (Gew.-%/100) des Monomeren n steht, und $Tg_n$ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Polymerisation erfolgt nach dem Emulsionspolymerisationsverfahren. Die Polymerisationstemperatur beträgt im Allgemeinen 40°C bis 120°C, vorzugsweise 50°C bis 110°C, besonders bevorzugt 50°C bis 100°C und am meisten bevorzugt 60°C bis 90°C.

Die Initiierung der Polymerisation erfolgt mit den für die Emulsionspolymerisation gebräuchlichen Initiatoren, insbesondere Redox-Initiator-Kombinationen. Beispiele für geeignete Oxidationsinitiatoren sind die Natrium-, Kalium- und Ammoniumsalze der Peroxodischwefelsäure, Wasserstoffperoxid, t-Butylperoxid, t-Butylhydroperoxid, Cumolhydroperoxid, Isopropylbenzolmonohydroperoxid und Azobisisobutyronitril. Bevorzugt werden die Natrium-, Kalium- und Ammoniumsalze der Peroxidischwefelsäure und Wasserstoffperoxid. Die genannten Initiatoren werden im Allgemeinen in einer Menge von 0,01 bis 2,0 Gew.-% bezogen auf das Gesamtgewicht der Monomere, eingesetzt.

Geeignete Reduktionsmittel, auch Reduktionsinitiator genannt, sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat (Brüggolit) und (Iso-)Ascorbinsäure. Bevorzugt werden Natriumhydroxymethansulfinat und (Iso-)Ascorbinsäure. Die Reduktionsmittelmenge beträgt vorzugsweise 0, 015 bis 3 Gew.-% -%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0,01 bis 5,0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäureethylester, Isopropanol und Acetaldehyd. Vorzugsweise werden keine regelnden Substanzen verwendet.

Beispiele für Schutzkolloide sind Polyvinylalkohole; Polyvinylpyrrolidone; Polyvinylacetale; Polysaccharide in Wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine, Ligninsulfonate; synthetische Polymere wie Poly(meth)acrylsäure, Copolymerisate von (Meth)acrylaten mit carboxylfunktionelle Comonomereinheiten, Poly(meth)acrylamid, Polyvinylsulfonsäuren und deren Wasserlöslichen Copolymere; Melaminformaldehydsulfonate, Naphthalinformaldehydsulfonate, Styrolmaleinsäure- und Vinylethermaleinsäure-Copolymere; kationische Polymerisate wie Poly-DADMAC.

Bevorzugte Schutzkolloide sind teilverseifte oder vollverseifte Polyvinylalkohole. Besonders bevorzugt sind teilverseifte Polyvinylalkohole mit einem Hydrolysegrad von 80 bis 95 Mol-% und einer Höpplerviskosität, in 4%-iger wässriger Lösung, von 1 bis 30 mPas (Methode nach Höppler bei 20°C, DIN 53015). Besonders bevorzugt sind auch teilverseifte, hydrophob modifizierte Polyvinylalkohole mit einem Hydrolysegrad von 80 bis 95 Mol-% und einer Höpplerviskosität, in 4%-iger wässriger Lösung, von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie vinylbutylether, Olefine wie Ethen und Decen. Der Anteil der hydrophoben Einheiten beträgt vorzugsweise 0,1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden Polyvinylalkohole mit einem Hydrolysegrad von 85 bis 94 Mol-% und einer Höpplerviskosität, in 4%-iger wässriger Lösung, von 3 bis 15 mPas (Methode nach Höppler bei 20°C, DIN 53015). Die genannten Schutzkolloide sind mittels dem Fachmann bekannter Verfahren zugänglich.

Die Polyvinylalkohole werden im Allgemeinen in einer Menge von insgesamt 1 bis 20 Gew.-% bezogen auf das Gesamtgewicht der Monomere, bei der Polymerisation zugesetzt.

Bei den erfindungsgemäßen Verfahren wird vorzugsweise ohne Zusatz von Emulgatoren polymerisiert. In Ausnahmefällen kann es von Vorteil sein, Emulgatoren einzusetzen, gegebenenfalls 1 bis 10 Gew.-%, bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die mit dem erfindungsgemäßen Verfahren erhältlichen wässrigen Dispersionen haben einen Feststoffgehalt von 30 bis 75 Gew.-%, vorzugsweise von 50 bis 60 Gew.-%.

Zur Herstellung der in Wasser redispergierbaren Polymerpulver werden die wässrigen Dispersionen, gegebenenfalls nach Zusatz einer oder mehrerer Trocknungshilfen, wie Schutzkolloiden, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt.

Als Trocknungshilfe können ein oder mehrere der oben genannten Schutzkolloide eingesetzt werden. Vorzugsweise werden als Trocknungshilfe ausschließlich Polyvinylalkohole eingesetzt. In der Regel beträgt der Anteil der Trocknungshilfe 3 bis 30 Gew.-%, bezogen auf das Gesamtgewicht des Polymerpulvers. Die Gesamtmenge an Schutzkolloid vor dem Trocknungsvorgang beträgt vorzugsweise 3 bis 30 Gew.-%, bezogen auf den Polymeranteil; bevorzugt werden 5 bis 20 Gew.-%, bezogen auf den Polymeranteil, als Trocknungshilfe eingesetzt.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Metakaolin, Silicate mit Partikelgrößen vorzugsweise im Bereich von 10 nm bis 40 μm, besonders bevorzugt 10 nm bis 10 μm.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt im Allgemeinen > 35%, bevorzugt > 45%.

Zur Verbesserung der anwendungstechnischen Eigenschaften können beim Trocknen weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Als Polymerisate in Form von in Wasser redispergierbaren Pulvern (Polymerpulver) bezeichnet man allgemein Pulverzusammensetzungen, welche mittels Trocknung der entsprechenden wässrigen Polymerdispersionen in Gegenwart von Schutzkolloiden zugänglich werden. Aufgrund dieses Herstellungsprozesses wird das feinteilige Polymerharz der Dispersion mit einem wasserlöslichen Schutzkolloid ausreichender Menge umhüllt. Bei der Trocknung wirkt das Schutzkolloid wie ein Mantel, welcher das Zusammenkleben der Teilchen verhindert. Beim Redispergieren der Polymerpulver in Wasser löst sich das Schutzkolloid wieder in Wasser und es liegt eine wässrige Dispersion der ursprünglichen Polymerteilchen vor (Schulze J. in TIZ, No. 9, 1985).

Die wässrigen Polymerdispersionen und die in Wasser redispergierbaren, schutzkolloidstabilisierten Polymerpulver können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmaßen, Fußbodenspachtelmaßen, Verlaufsmaßen, Dichtschlämmen, Fugenmörtel und Farben. Ferner als Bindemittel für Beschichtungsmittel und Klebemittel oder als Beschichtungs- bzw. Bindemittel für Textilien und Papier.

Ein wesentlicher Vorteil des erfindungsgemäßen Verfahrens besteht darin, dass durch technisch einfach ausführbare Variationen der Betriebsweise des Taylorreaktors die Eigenschaften der Vinylacetat-Ethylen-Copolymerisate, wie deren mittlere Partikelgrößen oder Partikelgrößenverteilung, gezielt variiert werden können. Dies kann beispielsweise durch Variation der Drehzahl des Rotors (2), der Zudosierungsraten oder des Zudosierungsorts der unterschiedlichen Einsatzstoffe, insbesondere der Initiatoren, erreicht werden. Bi- oder polymodale Partikelgrößenverteilungen sind beispielsweise erhältlich, indem die Initiatordosierung gegen Ende des Taylorreaktors gesteigert wird. Vinylacetat-Ethylen-Copolymerisate mit heterogener Morphologie sind erhältlich, indem an unterschiedlichen Dosierungsvorrichtungen (6) unterschiedliche Monomere oder verschiedene Monomerzusammensetzungen in den Taylorreaktor eingebracht werden. Somit sind durch verfahrenstechnisch einfache Maßnahmen Vinylacetat-Ethylen-Copolymerisate mit unterschiedlichem Eigenschaftsspektrum zugänglich. Das erfindungsgemäße Verfahren ist also durch eine hohe Flexibilität gekennzeichnet. Herkömmliche Verfahren erfordern zur Erzielung derartiger Effekte dagegen für gewöhnlich Variationen der Polymerisationsrezepturen.

Überraschenderweise sind diese Effekte bei Einsatz gasförmiger Monomere und selbst bei Durchführung der Emulsionspolymerisation unter hohem Druck im Taylorreaktor erzielbar. Eine Separation gasförmiger Monomere bei erfindungsgemäßem Betrieb des Taylorreaktors wurde nicht beobachtet. Eine Separation gasförmiger Polymere würde deren Einbau in die Copolymerisate konterkarieren und damit völlig unbrauchbare Copolymerisate ergeben. Überraschend war hierbei auch, dass bei der Emulsionspolymerisation gasförmiger Monomere am Lager des Rotors des Taylorreaktors keine Probleme auftraten und der Taylorrekator solch harschen Bedingungen schadlos standhielt.

Trotz Vorliegen unterschiedlicher Komponenten, wie Schutzkolloide, Vinylacetat-Ethylen-Copolymerisate oder Monomere, wurde beim erfindungsgemäßen Betrieb des Taylorreaktors keine Entmischung oder Separation von Einsatzstoffen beobachtet.

Überraschend war auch, dass die im Taylorreaktor oder beim Austritt aus dem Taylorreaktor im Polymerisationsgemisch auftretenden Scherkräfte zu keinem Koagulieren des Polymerisationsgemisches führten, wie dies bei Auftreten von derart hohen Scherkräften in herkömmlichen Schlaufenreaktoren oder Rührkesselreaktoren nachteiligerweise der Fall ist. Koagulierung führt zu Reaktorverschmutzung oder sogar zur Verstopfung von Reaktoren. Koagulate müssen auch aufwändig mittels Filtration aus dem Produkt entfernt werden. Vorteilhafterweise wurde beim erfindungsgemäßen Verfahren kein oder verhältnismäßig wenig Belag an der Wandung des Taylorreaktors gebildet.

Insgesamt erlaubt das erfindungsgemäße Verfahren die Herstellung von Vinylacetat-Ethylen-Copolymerisaten mit hohen Umsatzraten der Monomere und hohen Raumzeitausbeuten.

Überraschend war auch, dass mit dem erfindungsgemäßen Verfahren Vinylacetat-Ethylen-Copolymerisate mit einem Eigenschaftsspektrum erhalten werden können, wie sie in herkömmlichen Verfahren mit Rührkesseln gebildet werden. Damit können solche herkömmliche Verfahren durch das erfindungsgemäße Verfahren substituiert werden.

Die folgenden Beispiele dienen der detaillierten Erläuterung der Erfindung und sind in keiner Weise als Einschränkung zu verstehen.

Bestimmung der Brookfield-Viskosität:

Hierzu wurde die jeweilige wässrige Polymerdispersion auf 23°C temperiert und dann die Viskosität mit einem Brookfieldviskosimeter, unter Verwendung von Spindel 1 bzw. 2 bei 20 Umdrehungen pro Minute bestimmt.

Bestimmung des K-Wertes:

Aus der jeweiligen Polymerdispersion wurde durch Einwaage in einen 50 ml Maßkolben eine Dispersionsprobe hergestellt, die 0,5 g Polymerisat (ohne Polyvinylalkohol) und 4 g Wasser enthielt. Unter Rühren wurde langsam Tetrahydrofuran (THF) zugetropft, bis eine klare Lösung entstand. Nach Temperieren auf 23°C wurde mit THF bis zur Eichmarke aufgefüllt. Die Messlösung hatte eine Konzentration von 1 g Polymerisat pro 100 ml Lösung. Unter Berücksichtigung der Hagenbachkorrektur wurde die Viskosität einer gelfreien Probe der Messlösung und der polymerisatfreien Vergleichslösung im Ubbelohdeviskosimeter (Kapillare 1c) bei 23 °C bestimmt und damit die relative Lösungsviskosität $\eta_{rel}$ ermittelt. Mit dieser wurde die "Eigenviskosität k" nach Fikentscher, Cellulosechemie 13(1932)58, und der "K-Wert" zu K = 1000 k berechnet. Für die Eigenviskosität k gilt:

$$k = \frac{1}{2}\left(\frac{1.5\,c_V\,\log\eta_{rel}-c_V}{1.5\,c_V{}^2+75\,c_V}\right)+\left[\left(\frac{1}{2}\left(\frac{1.5\,c_V\,\log\eta_{rel}-c_V}{1.5\,c_V{}^2+75\,c_V}\right)\right)^2+\frac{\log\eta_{rel}}{1.5\,c_V{}^2+75\,c_V}\right]^{\frac{1}{2}},$$

wobei die Konzentration $c_V$ in g/dl einzusetzen ist.

Der K-Wert ist eine gebräuchliche und nützliche Maßzahl, die mit der viskosimetrischen mittleren Molmasse des Polymerisats korreliert. Der K-Wert ist naturgemäß von der Copolymerzusammensetzung abhängig und nimmt mit ansteigendem Ethylengehalt eines Vinylacetat-Ethylen-Mischpolymerisats ab.

Bestimmung der mittleren volumengewichteten Partikelgröße:

Hierzu wurde das Messgerät Beckmann Coulter® LS 13320 nach Gerätevorschrift, mit dem optischen Modell PVAC.RF780D und der optischen Konstanten für Polyvinylacetat verwendet. Die jeweilige Dispersion wurde mit Wasser verdünnt. Als Teilchengröße wird der Zentralwert der Volumenverteilungsfunktion des Partikeldurchmessers x3,50 in $\mu$m angegeben.

Vergleichsbeispiel 1 (Batchfahrweise):

In einem 600 Liter fassenden Rührkessel-Reaktor wurden 15 kg Celvol 523 (10%ig in Wasser, teilverseifter Polyvinylalkohol mit einer Höpplerviskosität (10%ig in Wasser) von 25 mPas), 96 kg M 04/140 (20%ig in Wasser, teilverseifter Polyvinylalkohol mit einer Höpplerviskosität (10%ig in Wasser) von 4 mPas) und 110 kg Wasser vorgelegt. Die wässrige Vorlage wurde mit Ameisensäure auf pH 4,0 gebracht. Zu dieser Mischung wurden 11 g Eisen-II-ammoniumsulfat und 250 kg Vinylacetat zugegeben. Die Drehzahl des Impellerrührers wurde auf 240 Umdrehungen pro Minute eingestellt, es wurde auf 60°C aufgeheizt, und es wurden 21 kg Ethylen aufgedrückt. Anschließend wurden tert-Butylhydro-peroxid (3%ig in Wasser) und Ascorbinsäure (5%ig in Wasser) mit Dosierraten von jeweils 1,3 kg/h eingefahren und auf 90°C erwärmt. Bei Erreichen von 79°C Reaktorinnentemperatur wurden die Dosierraten von tert-Butylhydroperoxid und Ascorbinsäure jeweils auf 1,8 kg/Stunde erhöht. Es wurden 63 kg Vinylacetat während 50 Minuten sowie eine Mischung aus 20 kg Polyvinylalkohol M04/140 in 10 Liter Wasser während 65 Minuten zudosiert und 16 kg Ethylen bei 48 bar nachgedrückt. Nach Ende der Vinylacetat-Dosierung wurde während 15 min auf 70°C abgekühlt. Tert-Butylhydro-peroxid (3%ig in Wasser) und Ascorbinsäure (5%ig in Wasser) wurden weiter zudosiert, bis ein Reaktorinnendruck von 15 bar erreicht wurde. Anschließend wurde der Rührkessel auf 55°C gekühlt und die Polymerdispersion unter Zugabe von 84 g eines Silicon-Entschäumers in einen Entspannungskessel überführt und während 30 Minuten entgast. Schließlich wurden 2,4 kg tert-Butylhydroperoxid (10%ig in Wasser) und 4,8 kg Ascorbinsäure (5%ig in Wasser) als Konservierungsmittel zugegeben.

Die so erhaltene Dispersion hatte folgende Eigenschaften:

| | |
|---|---|
| Feststoffgehalt: | 56,5%, |
| Brookfield-Viskosität: | 1004 mPas, |
| K-Wert: | 110, |
| mittlere volumengewichtete Partikelgröße: | 1,103 $\mu$m. |

In den folgenden Beispielen kam ein Taylorreaktor mit folgender Ausstattung und folgender Betriebsweise zum Einsatz:

Innenzylinder: Durchmesser von 15,4 cm,
Ringspaltbreite: 6 mm,
Reaktorinnenvolumen: 6,9 Liter,
Drehzahl des Innenzylinders: 400 bis 1400 Umdrehungen pro Minute, wie im jeweiligen Beispiel angegeben,
Reaktorlänge bzw. Länge des Innenzylinders: 1,60 m,
der Taylorreaktor war an folgenden Stellen mit Dosiervorrichtungen versehen:

- Dosiervorrichtung 1: am Reaktorboden,
- Dosiervorrichtung 2: war mit Dosiervorrichtung 1 kurz vor deren Anknüpfung an den Reaktorboden verbunden;

Die Dosiervorrichtungen 3 bis 5 waren in die äußere Reaktorwand eingelassen, in folgenden Abständen zum Reaktorboden:

- Dosiervorrichtung 3: 40 cm oberhalb des Reaktorbodens,
- Dosiervorrichtung 4: 80 cm oberhalb des Reaktorbodens,
- Dosiervorrichtung 5: 120 cm oberhalb des Reaktorbodens.

Beispiel 2:

Der Taylor-Reaktor wurde mit Wasser befüllt und über den Heizmantel auf 80°C temperiert. Die Drehzahl des Innenzylinders wurde auf 1300 Umdrehungen pro Minute eingestellt. Der Taylor-Reaktor wurde mit einem Reaktorinnendruck von 48 bar betrieben.

In einem Voremulsionsbehälter wurde eine Mischung aus 0,52 kg des Polyvinylalkohols Celvol V523 (10%ig in Wasser), 3,8 kg des Polyvinylalkohols M04/140 (20% in Wasser), 5,2 g Ascorbinsäure (in 1,9 kg Wasser), 10 kg Vinylacetat und 1,22 kg Ethylen vorgelegt, mit Ameisensäure auf pH 4,0 eingestellt und unter Rühren auf 80°C aufgeheizt. Auch im Voremulsionskessel herrschte ein Druck von 48 bar.

Die so im Voremulsionskessel hergestellte Mischung wurde im Laufe von 24 Stunden über eine Zuleitung durch die Dosierungsvorrichtung 1 durch den Reaktorboden kontinuierlich in den Taylorreaktor eingebracht.

An den vier Dosierungsvorrichtungen 2~5 des Taylorreaktors wurde Kaliumpersulfat (3%ig in Wasser) mit folgenden Dosierraten zudosiert: Dosierungsvorrichtung 2: 50 ml/h, Dosierungsvorrichtung 3: 45 ml/h, Dosierungsvorrichtung 4: 38 ml/h, Dosierungsvorrichtung 5: 32 ml/h.

Über eine Entnahmevorrichtung des Taylorreaktors wurde kontinuierlich Polymerisationsgemisch entnommen und in einen Entspannungskessel überführt und auf herkömmliche Weise bei 60°C unter Zugabe von 41 g tert-Butylhydroperoxid (10%ig in Wasser) und 81 g Ascorbinsäure (5%ig in Wasser) nachpolymerisiert.

Die so erhaltene Polymerdispersion wurde auf 20°C abgekühlt und hatte folgende Eigenschaften:

| | |
|---|---|
| Feststoffgehalt: | 56%, |
| Brookfield-Viskosität: | 534 mPas, |
| K-Wert: | 109, |
| mittlere volumengewichtete Partikelgröße: | 1,616 $\mu$m. |

Beispiel 3:

Die Polymerisation wurde thermisch initiiert, weswegen keine Ascorbinsäure zum Einsatz kam.

Beispiel 3 wurde analog zu Beispiel 2 ausgeführt mit folgenden Unterschieden:

- die Mischung im Voremulsionsbehälter enthielt keine Ascorbinsäure,
- die Drehzahl des Innenzylinders betrug 900 Umdrehungen pro Minute,
- Dosierraten der Zudosierung von Kaliumpersulfat (3%ig in Wasser): Dosierungsvorrichtung 2: 65 ml/h, Dosierungsvorrichtung 3: 58 ml/h, Dosierungsvorrichtung 4: 50 ml/h, Dosierungsvorrichtung 5: 43 ml/h.

Die so erhaltene Polymerdispersion hatte folgende Eigenschaften:

| | |
|---|---|
| Feststoffgehalt: | 57%, |
| Brookfield-Viskosität: | 674 mPas, |
| K-Wert: | 102, |
| mittlere volumengewichtete Partikelgröße: | 1,785 $\mu$m. |

Beispiel 4:

Beispiel 4 wurde analog zu Beispiel 3 ausgeführt mit dem Unterschied, dass die Drehzahl des Innenzylinders 1400 Umdrehungen pro Minute betrug.

Die so erhaltene Polymerdispersion hatte folgende Eigenschaften:

| | |
|---|---|
| Feststoffgehalt: | 56%, |
| Brookfield-Viskosität: | 380 mPas, |
| K-Wert: | 73, |

(fortgesetzt)

mittlere volumengewichtete Partikelgröße: 2,095 μm.

Beispiel 5:

Beispiel 5 wurde analog zu Beispiel 3 ausgeführt mit dem Unterschied, dass die Drehzahl des Innenzylinders 400 Umdrehungen pro Minute betrug.

Die so erhaltene Polymerdispersion hatte folgende Eigenschaften:

| | |
|---|---|
| Feststoffgehalt: | 55%, |
| Brookfield-Viskosität: | 1060 mPas, |
| K-Wert: | 101, |
| mittlere volumengewichtete Partikelgröße: | 1,214 μm. |

Die Beispiele 3 bis 5 zeigen, dass bei Einsatz der identischen Polymerisationsrezepturen durch bloßes Variieren der Betriebsweise des Taylorreaktors Polymerdispersionen mit unterschiedlichen Produkteigenschaften zugänglich werden.

Hierbei können mit dem Taylorreaktor Polymerdispersionen hergestellt werden, die in ihrem Eigenschaftsprofil herkömmlich hergestellten Polymerdispersionen entsprechen, wie mit Vergleichsbeispiel 1 und Beispiel 5 gezeigt.

## Patentansprüche

1. Verfahren zur Herstellung von Vinylacetat-Ethylen-Copolymerisaten in Form von deren wässrigen Dispersionen oder in Wasser redispergierbaren Pulvern mittels radikalisch initiierter Emulsionspolymerisation und gegebenenfalls anschließender Trocknung der dabei erhaltenen Polymerdispersionen, **dadurch gekennzeichnet, dass** die Emulsionspolymerisation von Vinylacetat, Ethylen und gegebenenfalls einem oder mehreren weiteren ethylenisch ungesättigten Monomeren in Gegenwart von einem oder mehreren Schutzkolloiden in einem oder mehreren Taylorreaktoren durchgeführt wird.

2. Verfahren zur Herstellung von Vinylacetat-Ethylen-Copolymerisaten in Form von deren wässrigen Dispersionen oder in Wasser redispergierbaren Pulvern nach Anspruch 1, **dadurch gekennzeichnet, dass** die Innenwand der äußeren Reaktorwand (1) und die Außenwand des Rotors (2) eine zylinderförmige Geometrie haben.

3. Verfahren zur Herstellung von Vinylacetat-Ethylen-Copolymerisaten in Form von deren wässrigen Dispersionen oder in Wasser redispergierbaren Pulvern nach Anspruch 1 oder 2, **dadurch gekennzeichnet, dass** der Taylorreaktor mit mindestens zwei Dosierungsvorrichtungen (6) ausgestattet ist.

4. Verfahren zur Herstellung von Vinylacetat-Ethylen-Copolymerisaten in Form von deren wässrigen Dispersionen oder in Wasser redispergierbaren Pulvern nach Anspruch 1 bis 3, **dadurch gekennzeichnet, dass** mindestens eine Dosierungsvorrichtung (6) am Reaktorboden (3) und/oder mindestens eine Dosierungsvorrichtung (6) am Lager des Rotors (2) und/oder mindestens eine Dosierungsvorrichtung (6) in die äußere Reaktorwand (1) angebracht ist.

5. Verfahren zur Herstellung von Vinylacetat-Ethylen-Copolymerisaten in Form von deren wässrigen Dispersionen oder in Wasser redispergierbaren Pulvern nach Anspruch 1 bis 4, **dadurch gekennzeichnet, dass** in die äußere Reaktorwand (1) mehrere Dosierungsvorrichtungen (6) in Durchflussrichtung örtlich nacheinander angebracht sind.

6. Verfahren zur Herstellung von Vinylacetat-Ethylen-Copolymerisaten in Form von deren wässrigen Dispersionen oder in Wasser redispergierbaren Pulvern nach Anspruch 1 bis 5, **dadurch gekennzeichnet, dass** über eine oder mehrere Dosierungsvorrichtungen (6), die in den Reaktorboden (3) eingelassen sind, Vinylacetat, Ethylen, Schutzkolloide sowie Oxidationsinitiatoren und
über eine oder mehrere in das Lager des Rotors (2) eingelassene Dosierungsvorrichtungen (6) Reduktionsinitiatoren zugegeben werden.

7. Verfahren zur Herstellung von Vinylacetat-Ethylen-Copolymerisaten in Form von deren wässrigen Dispersionen oder in Wasser redispergierbaren Pulvern nach Anspruch 1 bis 4, **dadurch gekennzeichnet, dass** über eine oder mehrere Dosierungsvorrichtungen (6), die in die äußere Reaktorwand (1) eingelassen sind, Initiatoren und/oder Monomere umfassend Vinylacetat und/oder Ethylen zugegeben werden.

8. Verfahren zur Herstellung von Vinylacetat-Ethylen-Copolymerisaten in Form von deren wässrigen Dispersionen oder in Wasser redispergierbaren Pulvern nach Anspruch 1 bis 7, **dadurch gekennzeichnet, dass** der Druck im ringspaltförmigen Reaktorvolumen (5) 10 bis 90 bar$_{abs}$. beträgt.

9. Verfahren zur Herstellung von Vinylacetat-Ethylen-Copolymerisaten in Form von deren wässrigen Dispersionen oder in Wasser redispergierbaren Pulvern nach Anspruch 1 bis 8, **dadurch gekennzeichnet, dass** zur Restmonomerentfernung in einem Rührkessel oder im Taylorreaktor nachpolymerisiert wird.

10. Verfahren zur Herstellung von Vinylacetat-Ethylen-Copolymerisaten in Form von deren wässrigen Dispersionen oder in Wasser redispergierbaren Pulvern nach Anspruch 1 bis 9, **dadurch gekennzeichnet, dass** Vinylacetat mit 1 bis 50 Gew.-% Ethylen; Vinylacetat mit 1 bis 50 Gew.-% Ethylen und 1 bis 50 Gew.-% von einem oder mehreren Vinylester mit 3 bis 12 C-Atomen im Carbonsäurerest; Vinylacetat, 1 bis 50 Gew.-% Ethylen und 1 bis 60 Gew.-% (Meth)Acrylsäureester von unverzweigten oder verzweigten Alkoholen mit 1 bis 15 C-Atomen; 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)-Acrylsäureester von unverzweigten oder verzweigten Alkoholen mit 1 bis 15 C-Atomen und 1 bis 40 Gew.-% Ethylen; oder Vinylacetat, 1 bis 50 Gew.-% Ethylen und 1 bis 60 Gew.-% Vinylchlorid polymerisiert werden; wobei sich die Angaben in Gew.-% auf jeweils 100 Gew.-% aufaddieren.

11. Verfahren zur Herstellung von Vinylacetat-Ethylen-Copolymerisaten in Form von deren wässrigen Dispersionen oder in Wasser redispergierbaren Pulvern nach Anspruch 1 bis 10, **dadurch gekennzeichnet, dass** die Schutzkolloide teilverseifte oder vollverseifte Polyvinylalkohole umfassen.

12. Verfahren zur Herstellung von Vinylacetat-Ethylen-Copolymerisaten in Form von deren wässrigen Dispersionen oder in Wasser redispergierbaren Pulvern nach Anspruch 1 bis 11, **dadurch gekennzeichnet, dass** in Abwesenheit von Emulgatoren polymerisiert wird.

## Claims

1. Process for preparing vinyl acetate-ethylene copolymers in the form of their aqueous dispersions or water-redispersible powders by means of radically initiated emulsion polymerization and optional subsequent drying of the resultant polymer dispersions, **characterized in that** the emulsion polymerization of vinyl acetate, ethylene and optionally one or more further ethylenically unsaturated monomers is carried out in the presence of one or more protective colloids in one or more Taylor reactors.

2. Process for preparing vinyl acetate-ethylene copolymers in the form of their aqueous dispersions or water-redispersible powders according to Claim 1, **characterized in that** the inner wall of the external reactor wall (1) and the outer wall of the rotor (2) have a cylindrical geometry.

3. Process for preparing vinyl acetate-ethylene copolymers in the form of their aqueous dispersions or water-redispersible powders according to Claim 1 or 2, **characterized in that** the Taylor reactor is equipped with at least two metering devices (6).

4. Process for preparing vinyl acetate-ethylene copolymers in the form of their aqueous dispersions or water-redispersible powders according to Claim 1 to 3, **characterized in that** at least one metering device (6) is mounted on the reactor base (3) and/or at least one metering device (6) is mounted on the bearing of the rotor (2) and/or at least one metering device (6) is mounted in the external reactor wall (1).

5. Process for preparing vinyl acetate-ethylene copolymers in the form of their aqueous dispersions or water-redispersible powders according to Claim 1 to 4, **characterized in that** a plurality of metering devices (6) are mounted locally in succession in the flow direction in the external reactor wall (1).

6. Process for preparing vinyl acetate-ethylene copolymers in the form of their aqueous dispersions or water-redispersible powders according to Claim 1 to 5, **characterized in that** vinyl acetate, ethylene, protective colloids and also oxidation initiators are added via one or more metering devices (6) which are embedded in the reactor base (3), and reduction initiators are added via one or more metering devices (6) embedded in the bearing of the rotor (2).

7. Process for preparing vinyl acetate-ethylene copolymers in the form of their aqueous dispersions or water-redispersible powders according to Claim 1 to 4, **characterized in that** initiators and/or monomers comprising vinyl acetate and/or ethylene are added via one or more metering devices (6) embedded in the external reactor wall (1).

8. Process for preparing vinyl acetate-ethylene copolymers in the form of their aqueous dispersions or water-redispersible powders according to Claim 1 to 7, **characterized in that** the pressure in the toroidal reactor volume (5) is 10 to 90 barabs..

9. Process for preparing vinyl acetate-ethylene copolymers in the form of their aqueous dispersions or water-redispersible powders according to Claim 1 to 8, **characterized in that** residual monomer is removed by post-polymerization in a stirred tank or in the Taylor reactor.

10. Process for preparing vinyl acetate-ethylene copolymers in the form of their aqueous dispersions or water-redispersible powders according to Claim 1 to 9, **characterized in that** vinyl acetate is polymerized with 1 to 50 wt% of ethylene; vinyl acetate is polymerized with 1 to 50 wt% of ethylene and 1 to 50 wt% of one or more vinyl esters having 3 to 12 carbon atoms in the carboxyl radical; vinyl acetate, 1 to 50 wt% of ethylene and 1 to 60 wt% of (meth) acrylic esters of unbranched or branched alcohols having 1 to 15 carbon atoms; 30 to 75 wt% of vinyl acetate, 1 to 30 wt% of vinyl laurate or vinyl esters of an alpha-branched carboxylic acid having 9 to 11 carbon atoms, and also 1 to 30 wt% of (meth)acrylic esters of unbranched or branched alcohols having 1 to 15 carbon atoms and 1 to 40 wt% of ethylene; or vinyl acetate, 1 to 50 wt% of ethylene and 1 to 60 wt% of vinyl chloride are polymerized; where the figures in wt% add up to 100 wt% in each case.

11. Process for preparing vinyl acetate-ethylene copolymers in the form of their aqueous dispersions or water-redispersible powders according to Claim 1 to 10, **characterized in that** the protective colloids comprise partially hydrolysed or fully hydrolysed polyvinyl alcohols.

12. Process for preparing vinyl acetate-ethylene copolymers in the form of their aqueous dispersions or water-redispersible powders according to Claim 1 to 11, **characterized in that** polymerization is carried out in the absence of emulsifiers.

## Revendications

1. Procédé de préparation de copolymères d'acétate de vinyle et d'éthylène sous forme de leurs dispersions aqueuses ou sous forme de poudres dispersibles dans l'eau au moyen d'une polymérisation en émulsion amorcée par voie radicalaire et éventuellement d'un séchage subséquent des dispersions de polymère ainsi obtenues,
   **caractérisé en ce que**
   la polymérisation en émulsion de l'acétate de vinyle, de l'éthylène et éventuellement d'un ou plusieurs monomères supplémentaires éthyléniquement insaturés est effectuée en présence d'un ou plusieurs colloïdes protecteurs dans un ou plusieurs réacteurs de Taylor.

2. Procédé de préparation de copolymères d'acétate de vinyle et d'éthylène sous forme de leurs dispersions aqueuses ou sous forme de poudres dispersibles dans l'eau selon la revendication 1, **caractérisé en ce que** la paroi intérieure de la paroi extérieure (1) du réacteur et la paroi extérieure du rotor (2) présentent une géométrie de forme cylindrique.

3. Procédé de préparation de copolymères d'acétate de vinyle et d'éthylène sous forme de leurs dispersions aqueuses ou sous forme de poudres dispersibles dans l'eau selon la revendication 1 ou 2, **caractérisé en ce que** le réacteur de Taylor est muni d'au moins deux dispositifs de dosage (6).

4. Procédé de préparation de copolymères d'acétate de vinyle et d'éthylène sous forme de leurs dispersions aqueuses ou sous forme de poudres dispersibles dans l'eau selon les revendications 1 à 3, **caractérisé en ce qu'**au moins un dispositif de dosage (6) est installé sur le fond (3) du réacteur et/ou au moins un dispositif de dosage (6) est installé sur le palier du rotor (2) et/ou au moins un dispositif de dosage (6) est installé dans la paroi extérieure (1) du réacteur.

5. Procédé de préparation de copolymères d'acétate de vinyle et d'éthylène sous forme de leurs dispersions aqueuses ou sous forme de poudres dispersibles dans l'eau selon les revendications 1 à 4, **caractérisé en ce que** plusieurs dispositifs de dosage (6) sont installés les uns derrière les autres localement dans la paroi extérieure (1) du réacteur dans la direction du flux.

6. Procédé de préparation de copolymères d'acétate de vinyle et d'éthylène sous forme de leurs dispersions aqueuses ou sous forme de poudres dispersibles dans l'eau selon les revendications 1 à 5, **caractérisé en ce que** l'on ajoute, par le biais d'un ou plusieurs dispositifs de dosage (6) qui sont introduits dans le fond (3) du réacteur, de l'acétate de vinyle, de l'éthylène, des colloïdes protecteurs et des initiateurs d'oxydation et
par le biais d'un ou plusieurs dispositifs de dosage (6) introduits dans le palier du rotor (2), des initiateurs de réduction.

7. Procédé de préparation de copolymères d'acétate de vinyle et d'éthylène sous forme de leurs dispersions aqueuses ou sous forme de poudres dispersibles dans l'eau selon les revendications 1 à 4, **caractérisé en ce que** des initiateurs et/ou des monomères présentant de l'acétate de vinyle et/ou de l'éthylène sont ajoutés par le biais d'un ou plusieurs dispositifs de dosage (6) qui sont introduits dans la paroi extérieure (1) du réacteur.

8. Procédé de préparation de copolymères d'acétate de vinyle et d'éthylène sous forme de leurs dispersions aqueuses ou sous forme de poudres dispersibles dans l'eau selon les revendications 1 à 7, **caractérisé en ce que** la pression dans le volume (5) du réacteur en forme de fente annulaire est de 10 à 90 bars$_{abs}$.

9. Procédé de préparation de copolymères d'acétate de vinyle et d'éthylène sous forme de leurs dispersions aqueuses ou sous forme de poudres dispersibles dans l'eau selon les revendications 1 à 8, **caractérisé en ce que** l'on effectue une post-polymérisation pour l'élimination des monomères résiduels dans une cuve d'agitation ou dans un réacteur de Taylor.

10. Procédé de préparation de copolymères d'acétate de vinyle et d'éthylène sous forme de leurs dispersions aqueuses ou sous forme de poudres dispersibles dans l'eau selon les revendications 1 à 9, **caractérisé en ce que** de l'acétate de vinyle avec 1 à 50 % en poids d'éthylène ; de l'acétate de vinyle avec 1 à 50 % en poids d'éthylène et 1 à 50 % en poids d'un ou plusieurs esters vinyliques ayant 3 à 12 atomes de C dans le résidu d'acide carboxylique ; de l'acétate de vinyle, 1 à 50 % en poids d'éthylène et 1 à 60 % en poids d'ester d'acide (méth)acrylique d'alcools ramifiés ou non ramifiés ayant 1 à 15 atomes de C ; 30 à 75 % en poids d'acétate de vinyle, 1 à 30 % en poids de laurate vinylique ou d'ester vinylique d'un acide carboxylique alpha-ramifié ayant 9 à 11 atomes de C, et 1 à 30 % en poids d'ester d'acide (méth)acrylique d'alcools ramifiés ou non ramifiés ayant 1 à 15 atomes de C et 1 à 40 % en poids d'éthylène ; ou de l'acétate de vinyle, 1 à 50 % en poids d'éthylène et 1 à 60 % en poids de chlorure de vinyle sont polymérisés ; les indications en % en poids totalisant à chaque fois 100 % en poids.

11. Procédé de préparation de copolymères d'acétate de vinyle et d'éthylène sous forme de leurs dispersions aqueuses ou sous forme de poudres dispersibles dans l'eau selon les revendications 1 à 10, **caractérisé en ce que** les colloïdes protecteurs comprennent des alcools polyvinyliques partiellement ou totalement saponifiés.

12. Procédé de préparation de copolymères d'acétate de vinyle et d'éthylène sous forme de leurs dispersions aqueuses ou sous forme de poudres dispersibles dans l'eau selon les revendications 1 à 11, **caractérisé en ce que** la polymérisation est effectuée en l'absence d'émulsifiants.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2555142
- WO 0259158 A
- US 20050159565 A
- US 20060062702 A
- US 20060204406 A
- DE 10150483
- EP 2471594 A
- WO 0000280 A
- DE 19960389
- EP 0498583 A

**In der Beschreibung aufgeführte Nicht-Patentliteratur**

- **NACH FOX T. G.** *Bull. Am. Physics Soc.,* 1956, vol. 1 (3), 123
- Polymer Handbook. J. Wiley & Sons, 1975
- **SCHULZE J.** *TIZ,* 1985, (9
- **FIKENTSCHER.** Eigenviskosität k. *Cellulosechemie,* 1932, vol. 13, 58